# FASCICULE DE BREVET EUROPEEN

(11) **EP 1 711 446 B1**
(45) Date de publication et mention de la délivrance du brevet: **22.08.2007**
(21) Numéro de dépôt: 05717483.1
(22) Date de dépôt: 25.01.2005
(51) Int. Cl.: C04B 41/63

(54) **UTILISATION DE COMPOSITIONS AQUEUSES DE TRAITEMENT DE SURFACES DE MORTIERS A BASE DE SULFATE DE CALCIUM ANHYDRE ASSURANT UNE FORTE ADHERENCE DES MATERIAUX DE FINITION**
VERWENDUNG VON WÄSSRIGEN ZUSAMMENSETZUNGEN ZUR BEHANDLUNG VON OBERFLÄCHEN VON MÖRTELN AUF BASIS VON WASSERFREIEM CALCIUMSULFAT, DIE EINE STARKE MATERIALENDHAFTUNG BEREITSTELLEN
USE OF AQUEOUS COMPOSITIONS FOR ANHYDROUS CALCIUM SULPHATE MORTAR SURFACE TREATMENT PROVIDING STRONG FINISHING MATERIAL ADHESION

(30) Priorité: 26.01.2004 FR 0400713
(43) Date de publication de la demande: 18.10.2006
(73) Titulaire: Chryso S.A.S., 92446 Issy-Les-Moulineaux (FR)
(72) Inventeur: DUBOIS-BRUGGER, Isabelle, 69680 CHASSIEU (FR); BOUSTINGORRY, Pascal Résidence la Prairie - Bat C2, F-91290 Arpajon (FR); MOSQUET, Martin, F-38300 Bourgoing-Jaillieu (FR)
(74) Mandataire: Gaucherand, Michel
(86) Numéro de dépôt international: PCT/FR2005/000159
(87) Numéro de publication internationale: WO 2005/080295

(56) Documents cités:
- AT-B- 326 031

## Description

L'invention concerne l'utilisation dé compositions de traitement pour les surfaces de mortiers à base de sulfate de calcium anhydre empêchant la formation d'une fine couche de particules d'hydrates à base de calcium de quelques centièmes de millimètres d'épaisseur apparaissant après coulage, prise et séchage à la surface desdits mortiers et augmentant la capacité d'adhérence des matériaux de finition destinés à recouvrir ultérieurement les surfaces ainsi traitées, compositions comprenant au moins un latex constitué d'une émulsion aqueuse colloïdale d'au moins un polymère.

Il est connu que des compositions aqueuses de sulfate de calcium anhydre ayant des propriétés hydrauliques sont notamment utilisées pour la réalisation de revêtements horizontaux tels que des chapes de sols sur lesquelles se développent au moment de la prise une fine couche de particules d'hydrates à base de calcium particulièrement génante pour les qualités d'adhésion des revêtements ultérieurement appliqués dont la durée de vie est fortement compromise.
C'est pourquoi l'invention concerne l'utilisation d'une composition de traitement de surfaces de mortiers à base de sulfate de calcium anhydre comprenant au moins un latex constitué d'une émulsion aqueuse colloïdale d'au moins un polymère, mise en oeuvre par pulvérisation sur la surface de mortiers à base de sulfate de calcium anhydre ayant la propriété d'empêcher la formation de ladite fine couche de particules d'hydrates à base de calcium comme par exemple la chaux de quelques centièmes de millimètres d'épaisseur apparaissant après coulage, prise et séchage à la surface desdits mortiers et de permettre d'augmenter ainsi la capacité d'adhérence des matériaux de finition tels que du plâtre, céramiques, peintures, enduits divers ou autres, destinés à recouvrir ultérieurement les surfaces de mortiers ainsi traitées.

La formation d'une fine couche d'hydrates à base de calcium comme la chaux qui apparaît après coulage, prise et séchage à la surface de mortiers à base de sulfate de calcium anhydre, génère des inconvénients qui peuvent constituer des défauts majeurs quand il s'agit de procéder à la pose de matériaux de finition, tels que par exemple les revêtements de plâtre, peintures, enduits de façade, les céramiques ou autres, sur lesdites surfaces de mortiers.

Il apparaît en effet :
- qu'une fine croûte de quelques centièmes de millimètres d'épaisseur présentant des plissements et des écaillages inesthétiques, se forme après prise et séchage à la surface des mortiers à base de sulfate de calcium anhydre, et diminue par conséquent les capacités d'adhérence à ladite surface des matériaux de finition;
- pour obtenir une adhérence suffisante des matériaux de finition à ladite surface des mortiers à base de sulfate de calcium anhydre, il se révèle absolument nécessaire de brosser, gratter ou poncer ladite surface avant de commencer les travaux de finition pour en éliminer la fine croûte de quelques centièmes de millimètres d'épaisseur présente à la surface desdits mortiers après prise et séchage de ceux-ci.

Par conséquent, il apparaît nécessaire d'enlever ou de supprimer cette croûte de quelques centièmes de millimètres d'épaisseur, avant de commencer les travaux de finition sur la surface de mortier brute pour obtenir une adhérence importante des matériaux de finition destinés à la recouvrir.

L'invention a pour objet l'utilisation de compositions de traitement de surface de mortiers à base de sulfate de calcium anhydre qui sont des compositions aqueuses à base de latex dotées des caractéristiques essentielles nécessaires et recherchées pour qu'une fois appliquées sur des surfaces de mortiers à base de sulfate de calcium anhydre immédiatement après le coulage, passage du balai, passage de la barre de débullage et de mise à niveau, elles empêchent la formation d'une fine couche de particules d'hydrates à base de calcium de quelques centièmes de millimètres d'épaisseur apparaissant après coulage, prise et séchage à la surface desdits mortiers et augmentent l'adhérence des matériaux de finition aux surfaces de mortiers à base de sulfate de calcium anhydre ainsi traitées.
Selon l'invention, les compositions de traitement destinées à être appliquées immédiatement par pulvérisation après le coulage et le passage de la barre de débullage sur des surfaces de mortiers à base de sulfate de calcium anhydre, à la fois, pour empêcher la formation de la fine couche de particules d'hydrates de calcium et augmenter la capacité d'adhérence des matériaux de finition destinés à les recouvrir, comprennent au moins un latex formé d'une émulsion aqueuse colloïdale d'au moins un polymère et/ou copolymère.
Dans le cas de l'invention, le latex est constitué d'une émulsion aqueuse colloïdale d'au moins un polymère et/ou copolymère choisi dans le groupe constitué par les homopolymères d'acide acrylique, d'acide méthacrylique, et des esters de ces acides dont le groupement esters est en C1 à C12, tels que méthyle, éthyle, propylée, butyle, pentyle, hexyle, heptyle, octyle, 2-ethyle-hexyle, 2-ethyle-butyle, 2-heptyle-hexyle,par les copolymères d'acide acrylique, d'acide méthacrylique et/ou des esters de ces acides dont le groupement esters est en C₁ à C₁₂, les copolymères de vinyle et d'acide acrylique ou d'acide méthacrylique, les copolymères de vinyle et d'esters en C₁ à C₁₂, les copolymères d'acide acrylique ou méthacrylique, les copolymères d'acide acrylique ou d'acide méthacrylique et d'esters acryliques ou méthacryliques, des copolymères de styrène-acrylique ou méthacrylique, les copolymères d'éthylène et d'acétate de vinyle, les copolymères d'éthylène et d'acide acrylique ou méthacrylique, les copolymères acryliques/uréthane, les copolymères styrène/butadiène, les copolymères de vinyle et d'acide maléïque, les copolymères de vinyle et d'anhydride maléïque, les copolymères de styrène et d'acide maléïque et les copolymères de styrène et d'anhydride maléïque.
Préférentiellement, les compositions de traitement selon l'invention comprennent au moins un latex formé d'une émulsion aqueuse colloïdale d'au moins un copolymère choisi dans le groupe constitué par les copolymères d'acide acrylique ou méthacrylique, les copolymères d'acide acrylique ou d'acide méthacrylique et d'esters acryliques ou méthacryliques et les copolymères de styrène-acrylique ou méthacrylique.
L'utilisation des compositions de traitement selon l'invention par pulvérisation sur des surfaces de mortiers à base de sulfate de calcium anhydre, empêchent la formation d'une fine couche de particules d'hydrates à base de calcium de quelques centièmes de millimètres d'épaisseur apparaissant après coulage, prise et séchage à la surface des mortiers et procurent aux dites surfaces ainsi traitées une augmentation de l'adhérence des matériaux de finition qui doivent les recouvrir.

Les compositions selon l'invention sous forme d'émulsions aqueuses ont une teneur en matière sèche de latex qui peut varier, en général, de 10 % à 80 % en poids.
Préférentiellement le pourcentage de matières actives en latex (ou matières sèches en latex) des compositions de traitement selon l'invention est de 20 % à 70 % en poids, très préférentiellement de 30 % à 60 % en poids.
Les compositions selon l'invention, qui sont des émulsions aqueuses, sont stables au stockage, même prolongé.
Lesdites compositions de traitement sous forme émulsions aqueuses sont utilisées par pulvérisation sur les surfaces à protéger, la charge utile déposée par unité de surface étant comprise entre 50 g/m² et 200 g/m².
Les compositions de traitement selon l'invention qui sont des émulsions aqueuses à base de latex, peuvent être diluées.

Dans le cadre de la présente invention par compositions aqueuses de sulfate de calcium anhydre, on entend des compositions dans lesquelles le sulfate de calcium anhydre présentant des propriétés hydrauliques représente au moins 80 % en poids du liant hydraulique total. L'addition à de telles compositions aqueuses de sulfate de calcium anhydre de dispersant est usuelle pour :
- permettre une réduction de la teneur en eau ;
- empêcher des phénomènes incontrôlables de ségrégation et de ressuage ;
- et/ou maintenir dans le temps la fluidité desdites compositions,
- et permettre des temps de prise (temps de début de prise et de fin de prise) compatibles avec l'application visée.

En effet, des dispersants soit issus de la condensation du formaldéhyde et de naphtalènes sulfonés, soit issus de la condensation du formaldéhyde et de mélamines sulfonées sont connus de l'état de la technique pour permettre à des compositions de sulfate de calcium anhydre d'avoir une teneur réduite en eau, un maintien prolongé de la fluidité.
Il est également connu d'utiliser des dispersants de type polycarboxylique, constitués essentiellement de polymères comprenant une chaîne polycarboxylique éventuellement salifiée à laquelle sont fixés des chaînes polyéthers par l'intermédiaire de fonction ester, mis en oeuvre dans des compositions aqueuses de sulfate de calcium anhydre ayant des propriétés hydrauliques pour y exercer, simultanément à leur intéressante propriété dispersante, une amélioration du maintien de la fluidité dans le temps et un contrôle des temps de début et/ou de fin de prise desdites compositions. Une description et une utilisation de ce type de dispersant est par exemple donnée dans la demande de brevet internationale publiée WO 03/011790. Ainsi, l'adjuvant d'un mortier adjuvanté à base de sulfate de calcium anhydre peut être par exemple un dispersant de type polycarboxylate de polyoxyéthylène.

L'invention sera mieux comprise grâce aux exemples ci-après présentés à titre illustratif, non limitatif.
Dans le cadre de ces exemples qui illustrent la capacité des compositions de traitement selon l'invention à procurer aux surfaces de mortiers à base de sulfate de calcium anhydre traitées par lesdites compositions une capacité d'adhérence très améliorée pour les matériaux de finition les recouvrant, les tests d'adhérence auxquels sont soumises lesdites compositions sont définis ci-après.

### Fabrication de mortier à base de sulfate de calcium anhydre.

On prépare un mortier adjuvanté à base de sulfate de calcium anhydre ayant la formulation suivante :
- 700 kg/m³ de sulfate de calcium anhydre (kg/m³)
- 1200 kg/m³ de sable Bernières (kg/m³)
- 260 kg/m³ d' eau (kg/m³)
- 0,12 % en poids d'extrait sec, rapporté au poids de sulfate de calcium anhydre, d'un dispersant de type polymélamine sulfonée connu sous le nom commercial de CHRYSO®Fluid GT

La préparation du mortier décrit ci-dessus est réalisée dans un malaxeur de type Rayneri suivant le protocole de gâchage suivant :
- homogénéisation à sec du sable et du liant anhydrite à vitesse lente entre 0-30 secondes;
- ajout de l'eau avec le dispersant de type polymélamine sulfonée entre 30-75 secondes;
- arrêt du malaxeur pour racler les bords et le fond du bol à la truelle entre 120-180 secondes;
- malaxage à vitesse rapide entre 180-270 secondes.

L'étalement mesuré au cône normalisé chape anhydrite est compris entre 230 et 250 cm. Le mortier ainsi réalisé est coulé dans des moules carrés à bords obliques préalablement huilés de dimension 40 x 40 cm et la surface dudit mortier est soumise au passage d'une barre de débullage et de mise à niveau pour obtenir une surface lisse.

Sont préparées ainsi des dalles de mortiers de même compositions.
La préparation du mortier décrit ci-dessus est réalisée conformément aux conditions établies dans la norme NF EN 196-1 et NF P 18-303.

### Dépôt sur la surface lisse de mortier à base de sulfate de calcium anhydre de la composition de traitement selon l'invention

La composition de traitement est vaporisée immédiatement après le passage de la barre de débullage à raison de 50 à 150 g/m² sur la surface libre d'une dalle de mortier préparée.
Une autre dalle de mortier, réalisée en même temps que la première, forme la surface de référence, exempte de tout traitement de surface par la composition selon l'invention.

Des carreaux en grés céramique de dimension 5 × 5 cm sont collés sur la surface des dalles traitées et non traitées avec la composition aqueuse de traitement selon l'invention 11 jours après la fabrication desdites dalles. Les carreaux sont collés sur la surface des dalles au moyen d'un mortier-colle à carrelage (colle LANKO 554 commercialisée par la société Lafarge Mortiers).
Ce mortier-colle est appliqué selon la méthode opératoire qui consiste à utiliser :
- un peigne aux dents carrées 5 x 5 x 5 pour étaler le mortier-colle,
- une charge de 2kg déposée pendant 25 à 35 secondes sur chaque carreau en cours de collage, 20 carreaux étant collés par dalle,
- un temps de séchage à température ambiante de la colle-mortier qui est de 15 jours.

### Collage des tés d'arrachage sur les carreaux de céramique

Les tés d'arrachage sont collés un jour avant l'arrachage des carreaux au moyen de la colle LANKO 532.

### Arrachement des carreaux par l'intermédiaire des tés.

Les carreaux sont arrachés par l'intermédiaire des tés à l'aide d'un dynamomètre.

### Exemple

On utilise une composition de traitement de latex en émulsion aqueuse, le Plextol D498 commercialisé par Carrechim , ce latex est un copolymère d'acides acrylique et méthacrylique.
Trois compositions de traitement de l'invention ont été réalisées et réunies dans le tableau I ci-après.

**Tableau I**

| Composition | % en poids d'eau dans l'émulsion | % en poids d'extrait sec de latex | dilution aqueuse de l'émulsion en % |
|---|---|---|---|
| C1 | 50 | 50 | - |
| C2 | 75 | 25 | 50 |
| C3 | 87,5 | 12,5 | 75 |

Des essais d'utilisation desdites compositions ont été réalisés sous la forme d'une couche pulvérisée à la surface de mortiers, mise en oeuvre pour empêcher la formation de la fine couche de particules d'hydrates de calcium formée après le coulage desdits mortiers et pour augmenter ainsi l'adhérence des carreaux de céramiques aux dites surfaces des dalles traitées.
Ces essais ont été réalisés à différents dosages exprimés en g/m² de compositions de traitement définies précédemment.
Les résultats de la capacité d'adhérence des carreaux de céramique aux surfaces traitées par lesdites compositions et aux surfaces non traitées constituant les témoins ont été réunis dans le tableau II ci-après, sous la forme de valeurs de traction en Mpa données par un dynamomètre à traction au moment où se produit l'arrachement de chaque carreau céramique.

**Tableau II**

| | Composition | Charge utile déposée par unité de surface en g/m² | Mesure de l'adhérence de céramique aux surfaces traitées et non traitées : Valeur de traction en MPa |
|---|---|---|---|
| Surface non traitée, non poncée | - | - | 0,55 |
| Surface non traitée, poncée | - | - | 1,22 |
| Surface traitée | C1 | 50 | 1,27 |
| Surface traitée | C2 | 50 | 0,97 |
| Surface traitée | C3 | 50 | 0,69 |
| Surface traitée | C2 | 100 | 1,30 |
| Surface traitée | C3 | 100 | 1,05 |
| Surface traitée | C2 | 150 | 1,35 |
| Surface traitée | C3 | 150 | 1,25 |

Les résultats obtenus mettent en évidence une augmentation significative de la capacité d'adhérence des matériaux de finition pour des surfaces de mortier traitées par les compositions C1 à C3 selon l'invention pour une charge utile pulvérisée équivalente de 50 g/m² comparés à celles obtenues pour des surfaces de mortier non traitées et non poncées.

Par ailleurs, le résultat de la capacité d'adhérence de céramique à la surface de mortier traitée par la composition C1 pour une charge utile pulvérisée de 50 g/m² comparé à celui d'une surface de mortier non traitée mais poncée, montre que l'on a bien une augmentation de la capacité d'adhérence du céramique lorsque la surface de mortier a été traitée par la composition de traitement C1. En effet, la pulvérisation de la composition de traitement C1 sur la surface du mortier immédiatement après le coulage, passage du balai, passage de la barre de débullage et de mise à niveau empêche la formation de la fine couche de particules d'hydrates à base de calcium qui apparaît usuellement après coulage, prise et séchage à la surface du mortier, et permet une augmentation de la capacité d'adhérence du matériau de finition comme en témoigne cet essai.

Les comparaisons des capacités d'adhérence des compositions C1, C2 et C3 entre elles montrent que lorsque l'émulsion en latex est diluée (compositions C2 et C3) une augmentation de la charge utile à pulvériser est nécessaire pour que la capacité d'adhérence des matériaux de finition -soit équivalente à celle de composition de traitement (composition C1) non diluée.

## Revendications

1. Utilisation d'une composition aqueuse de traitement pour les surfaces de mortiers à base de sulfate de calcium anhydre **caractérisée en ce que** la composition de traitement comprenant au moins un latex constitué d'une émulsion aqueuse colloïdale d'au moins un polymère, est déposée après coulage sur la surface des mortiers à base de sulfate de calcium anhydre immédiatement après le passage de la barre de débullage pour empêcher la formation d'une fine couche de particules d'hydrates à base de calcium apparaissant après coulage, prise et séchage à la surface desdits mortiers et augmenter ainsi la capacité d'adhérence des matériaux de finition destinés à recouvrir ultérieurement les surfaces traitées.

2. Utilisation selon la revendication 1, **caractérisée en ce que** le latex est constitué d'une émulsion aqueuse colloïdale d'au moins un polymère et/ou copolymère choisi dans le groupe constitué par les homopolymères d'acide acrylique, d'acide méthacrylique, et des esters de ces acides dont le groupement esters est en C₁ à C₁₂, les copolymères d'acide acrylique, d'acide méthacrylique et/ou des esters de ces acides dont le groupement esters est en C₁ à C_{12,} les copolymères de vinyle et d'acide acrylique ou d'acide méthacrylique, les copolymères de vinyle et d'esters en C₁ à C₁₂, les copolymères, d'acide acrylique ou méthacrylique, les copolymères d'acide acrylique ou d'acide méthacrylique et d'esters acryliques ou méthacryliques, des copolymères de styrène-acrylique ou méthacrylique, les copolymères d'éthylène et d'acétate de vinyle, les copolymères d'éthylène et d'acide acrylique ou méthacrylique, les copolymères acryliques/uréthane, les copolymères styrène/butadiène, les copolymères de vinyle et d'acide maléïque, les copolymères de vinyle et d'anhydride maléïque, les copolymères de styrène et d'acide maléïque et les copolymères de styrène et d'anhydride maléïque.

3. Utilisation selon la revendication 2, **caractérisée en ce que** le copolymère est préférentiellement choisi dans le groupe constitué par les copolymères d'acide acrylique ou méthacrylique, les copolymères d'acide acrylique ou d'acide méthacrylique et d'esters acryliques ou méthacryliques, des copolymères de styrène-acrylique ou méthacrylique.

4. Utilisation selon l'une quelconque des revendications 1 à 3, **caractérisée en ce que** la composition est pulvérisée sur lesdites surfaces à raison d'une charge utile déposée par unité de surface comprise entre 50 g/m² et 200 g/m² .

5. Utilisation selon la revendication 1, **caractérisée en ce que** le pourcentage d'extrait sec en latex présent dans la composition est compris préférentiellement entre 20% et 70% en poids, très préférentiellement entre 30% et 60% en poids.

6. Utilisation selon l'une quelconque des revendications précédentes pour le traitement de surfaces de mortier adjuvanté à base de sulfate de calcium anhydre.

7. Utilisation selon la revendication 6 **caractérisée en ce que** l'adjuvant du mortier adjuvanté à base de sulfate de calcium anhydre est un dispersant de type polymélamine sulfonée.

8. Utilisation selon la revendication 6 **caractérisée en ce que** l'adjuvant du mortier adjuvanté à base de sulfate de calcium anhydre est un dispersant de type polycarboxylate de polyoxyéthylène.

## Claims

1. Use of an aqueous composition for the treatment of surfaces of mortars based on anhydrous calcium sulphate, **characterized in that** the composition for the treatment including at least one latex consisting of a colloidal aqueous emulsion of at least one polymer is applied after pouring on the surface of mortars based on anhydrous calcium sulphate immediately after passing the debubbling wiper in order to avoid the formation of a thin layer of particles of calcium-based hydrates which appears after pouring, setting and drying on the surface of said mortars, and thereby increase the adherence ability of finishing materials intended to be subsequently applied onto these treated surfaces.

2. Use according to claim 1, **characterized in that** the latex consists of an aquous colloidal emulsion of at least one polymer and / or copolymer selected from the group formed by homopolymers of acrylic acid, methacrylic acid and esters of these acids with an ester group in C1 to C12, copolymers of acrylic acid, methacrylic acid and / or esters of these acids with an ester group in C1 to C12, copolymers of vinyl and acrylic or methacrylic acid, copolymers of vinyl and esters in C1 to C12, copolymers of acrylic or methacrylic acid, copolymers of acrylic or methacrylic acid and acrylic or methacrylic esters, copolymers of acrylic of methacrylic styrene, copolymers of ethylene and vinylacetate, copolymers of ethylene and acrylic or methacrylic acid, copolymers acryl / urethane, copolymers styrene / butadiene, copolymers of vinyl and maleic acid, copolymers of vinyl and maleic anhydride, copolymers of styrene and maleic acid, and copolymers of styrene and maleic anhydride.

3. Use according to claim 2, **characterized in that** the copolymer is preferably selected from the group formed by copolymers of acrylic or methacrylic acid, copolymers of acrylic or methacrylic acid and acrylic or methacrylic esters, and copolymers of acrylic or methacrylic styrene.

4. Use according to any of claims 1 to 3, **characterized in that** the composition is sprayed onto said surfaces in an amount of 50 to 200 g/m².

5. Use according to claim 1, **characterized in that** the dry extract of latex present in said composition is preferably comprised between 20 and 70 weight percent, and more preferably comprised between 30 and 60 weight percent.

6. Use according to any of the previous claims for the treatment of surfaces of admixed mortar based on anhydrous calcium sulphate.

7. Use according to claim 6, **characterized in that** the additive of said admixed mortar based on anhydrous calcium sulphate is a dispersing agent of the sulphonated polymelamin type.

8. Use according to claim 6, **characterized in that** the additive of said admixed mortar based on anhydrous calcium sulphate is a dispersing agent of the polyoxyethtylene - polycarboxylate type.

## Patentansprüche

1. Verwendung einer wässrigen Zusammensetzung zur Behandlung der Oberfläche von Mörteln auf der Basis von wasserfreiem Kalziumsulfat,
**dadurch gekennzeichnet, dass** die Zusammensetzung, die wenigstens eine aus einer wässrigen, kolloidalen Emulsion wenigstens eines Polymeren bestehende Latex umfasst, nach dem Abguss des Mörtels auf der Basis von wasserfreiem Kalziumsulfat unmittelbar nach dem Abziehen mit einem Blasenwischer, der die Bildung einer dünnen Schicht von Hydrat-Teilchen auf Kalziumbasis nach dem Abguss, dem Erhärten und dem Trocknen auf der Oberfläche der genannten Mörtel verhindert, auf die Oberfläche aufgetragen wird, um auf diese weise die Haftfähigkeit der Verfeinerungswerkstoffe, die später die behandelten Oberflächen bedecken sollen, zu erhöhen.

2. Verwendung nach Anspruch 1, **dadurch gekennzeichnet, dass** die Latex aus einer wässrigen kolloidalen Emulsion wenigstens eines Polymeren und/oder Kopolymeren besteht, das aus der Gruppe ausgewählt ist, die aus den Homopolymeren der Acrylsäure, der Methacrylsäure, und den Estern dieser Säuren, deren Estergruppe aus C1 bis C12 ist, den Kopolymeren der Acrylsäure, der Methacrylsäure und/oder den Estern dieser Säuren, deren Estergruppen aus C1 bis C12 ist, den Kopolymeren aus Vinyl und Acryl- oder Methacrylsäure, den Kopolymeren aus Vinyl und Estern aus C1 bis C12, den Kopolymeren der Acrylsäure oder Methacrylsäure, den Kopolymeren der Acryl- oder Methacrylsäure und Acryl- oder Methacrylestern, den Kopolymeren aus Acryl- oder Methacryl-Styrol, den Kopolymeren aus Ethylen und Vinylacetat, den Kopolymeren aus Ethylen und Acryl- oder Methacrylsäure, den Kopolymeren aus Acryl / Urethan, den Kopolymeren aus Styrol / Butadien, den Kopolymeren aus Vinyl und Maleinsäuren, den Kopolymeren aus Vinyl und Maleinanhydrid, den Kopolymeren aus Styrol und Maleinsäure, und den Kopolymeren aus Styrol und Maleinanhydrid, besteht.

3. Verwendung nach Anspruch 2, **dadurch gekennzeichnet, dass** das Kopolymere vorzugsweise aus der Gruppe ausgewählt ist, die aus den Kopolymeren der Acryl- oder Methacrylsäure, den Kopolymeren der Acryl- oder Methacrylsäure und Acryl- oder Methacrylestern, aus den Kopolymeren Acryl- oder Methacryl-Styrol besteht.

4. Verwendung nach irgendeinem der Ansprüche 1 bis 3, **dadurch gekennzeichnet, dass** die Zusammensetzung auf die genannten Oberflächen in einer Menge zwischen 50 und 200 g/m² aufgesprüht wird.

5. Verwendung nach Anspruch 1, **dadurch gekennzeichnet, dass** die Trockenmasse der Latex in der Zusammensetzung vorzugsweise zwischen 20 und 70 Gewichtsprozenten liegt, und besonders bevorzugt zwischen 30 und 60 Gewichtsprozenten.

6. Verwendung nach irgendeiner der vorstehenden Ansprüche zur Behandlung der Oberflächen von additivierten Mörteln auf der Basis von wasserfreiem Kalziumsulfat.

7. Verwendung nach Anspruch 6, **dadurch gekennzeichnet, dass** das Additiv des additivierten Mörtels auf der Basis von wasserfreiem Kalziumsulfat ein Dispergiermittel vom Typ sulfoniertes Polymelamin ist.

8. Verwendung nach Anspruch 6, **dadurch gekennzeichnet, dass** das Additiv des additivierten Mörtels auf der Basis von wasserfreiem Kalziumsulfat ein Dispergiermittel vom Type Polyoxyethylen-Polycarboxylat ist.
